# EUROPEAN PATENT APPLICATION

(11) **EP 2 189 690 A1**
(43) Date of publication of application: **26.05.2010**
(21) Application number: 09177118.8
(22) Date of filing: 25.11.2009
(51) Int. Cl.: F16K 1/02, F16K 31/50

(54) **Tap**

(30) Priority: 25.11.2008 NL 2002254
(71) Applicant: H.S.F.Samenwerkende Fabrieken B.V., 6921 RE Duiven (NL)
(72) Inventor: Siccama, Hans, 7557 GS, Hengelo (ov) (NL)
(74) Representative: Hatzmann, Martin

(57) **Abstract**

Fluid tap, provided with:
- a tap housing (3) with a fluid inlet (3i) and fluid outlet (3u);
- an at least axially translatable spindle (8) provided with outer screw thread (8a);
- a spindle nut (9) provided with inner screw thread (9a) to cooperate with the spindle (8), such that a rotation of the spindle with respect to the spindle nut, or vice versa, leads to translation of the spindle;

wherein the tap (1) is manufactured from plastic, wherein the tap (1) is provided with a stop limiting a translation of the spindle (8).

## Description

The invention relates to a fluid tap, provided with:
- a tap housing with fluid inlet and fluid outlet;
- an at least axially translatable spindle provided with outer screw thread;
- a spindle nut provided with inner screw thread to cooperate with the spindle, such that a rotation of the spindle relative to the spindle nut, or vice versa, leads to translation of the spindle.

Such a tap is known from practice, see for instance W02008/058320, for instance for domestic use. The tap is, for instance, mountable on a system of water mains, and is arranged to connect a washing machine water supply hose thereto.

The known tap, which consists, for a large part, of metal parts, is fairly reliable, but still has various drawbacks. Thus, the tap is relatively expensive, while mounting of the tap on a water supply pipe is laborious in that sealing tape or flax needs to be used for this. US 4,244,556 discloses a tap which is provided with a plastic housing and a plastic valve part. This tap is little durable and can lead to leakage relatively quickly during use.

The present invention contemplates providing a solution to these problems. In particular, the invention contemplates a particularly reliable and relatively inexpensively available fluid tap, for instance a tap for connecting a washing machine hose thereto.

To this end, the tap according to the invention is characterized in that the tap is manufactured from plastic, wherein the tap is provided with a stop which limits a translation of the spindle, wherein the stop blocks in particular a rotation movement of the spindle to limit the translation.

It is found that, in this manner, a reliable, durable and relatively inexpensively producible tap can be obtained. The tap is particularly intended to serve as a washing machine connecting point, but can also be used in different manners, both inside a household and outside it, for instance in a laboratory or the like. The tap is further particularly well suitable to control water flow. Since the tap is manufactured from plastic, the tap is also particularly suitable to control release of fluids other than water. The present tap is, in addition, toxicologically versatile.

According to a further elaboration, the tap is provided with closing means to close off the inlet in a closing position, and release it in a releasing position. In particular, the spindle is part of the closing means. Preferably, the tap (in particular the closing means) is provided with an axially movable valve body which, in a closing position, rests on a valve seat to close off the inlet, and which, in a releasing position, is moved away from the seat to release the inlet. In that case, the above-mentioned spindle may be placed behind the valve body. Optionally, the spindle may be arranged to block the valve body in the closing position. Further, it is advantageous if the tap is provided with an aerator to aerate the fluid inlet. The aerator may particularly be provided with a passage provided in the tap housing and a plastic valve element.

According to an extra advantageous embodiment, the tap is provided with a first resilient closing means, in particular an O-ring, which is located between an outer circumference of the spindle and an inside of the tap housing when the spindle has been brought into a closing position. In this manner, the spindle itself can serve as a primary closing means of the tap.

Further advantageous elaborations of the invention are described in the subclaims. Now the invention will be explained in more detail with reference to two exemplary embodiments and the drawing, in which:
Fig. 1 shows a longitudinal section of an exemplary embodiment of the invention;
Fig. 2 shows a perspective drawing of the example shown in Fig. 1;
Fig 3 shows a perspective drawing of the tap housing of the example;
Fig. 4 shows a perspective drawing of the spindle nut of the example;
Fig. 5 shows a perspective drawing of the spindle of the example;
Fig. 6 shows a similar section to Fig. 1 of a second exemplary embodiment;
Fig. 7 shows a similar section to Fig. 1 of a third exemplary embodiment, in a releasing position of the spindle, and
Fig. 8 shows a section of the third exemplary embodiment, in a closing position of the spindle.

In this application, the same or corresponding features are designated by the same or corresponding reference symbols.

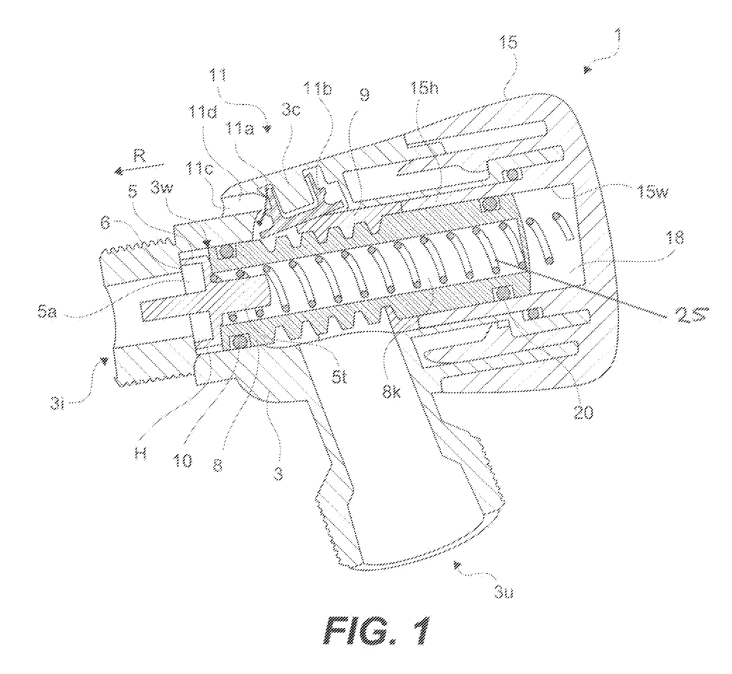

Fig. 1 shows an example of a tap 1 connectable to a system of water mains, for instance a water tap for connecting a washing machine to it.

Washing machine taps are known per se from practice. The present tap 1 is advantageously manufactured substantially wholly from plastic, and yet of sturdy and reliable design.

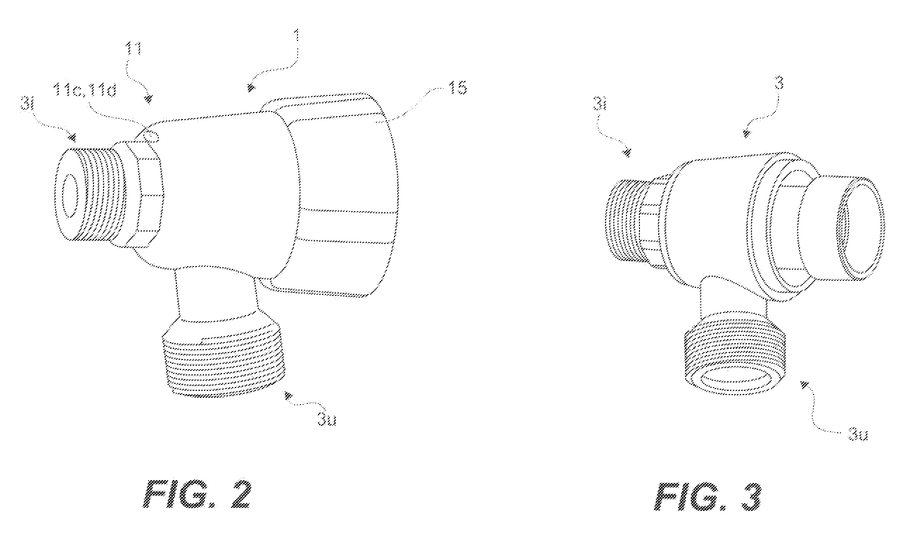

The tap preferably comprises an aerator tap, and is provided with a plastic tap housing 3 (see Fig. 3) with a water inlet 3i and water outlet 3u. The housing 3 may be manufactured from different plastics, and is preferably wholly manufactured from a rigid, for instance fiber-reinforced, plastic. Good results are obtained if the housing 3 is manufactured from glass fiber-reinforced plastic. Alternatively, the housing 3 may be wholly manufactured from POM (polyoxymethylene), or other hard plastic.

The fluid inlet 3i of the tap 1 is provided with a plastic neck with outer screw thread (see Figs. 1-3). During mounting, this neck can be screwed onto inner screw thread of a fluid supply pipe (in this case: water supply pipe) (not shown). Because the screw thread of the inlet 3i in itself is manufactured from plastic, a reliable fluid-tight coupling between the tap 1 and water mains screw thread can be obtained without using wrapping means such as flax or sealing tape. In addition, the tap 1 can be provided on screw thread of a water mains utilizing flax or tape, which also yields good sealing results.

In this example, the fluid inlet 3i is concentric with the centerline of the housing. The fluid inlet 3u is provided with a plastic outflow nozzle with outer screw thread, for instance to connect a water hose of a machine (not shown) thereto. The outflow nozzle of the example 1 extends sideways from the tap housing 3, for instance at an angle within the range of approximately 90-120⁰ with respect to a centerline of the housing 3.

The tap is provided with closing means 5, 8 to close off the inlet in a closing position, and to release it in a releasing position. In particular, an inner space of the tap 1 surrounded by the housing 3 is provided with an axially movable valve body 5 which is part of the above-mentioned closing means. In a closing position, the valve body 5 rests on a valve seat 6 (at least, makes direct or indirect contact therewith) to close off the inlet 3i. In a releasing position, the valve body 5 is moved away from the seat 6 to release the inlet 3i to allow fluid flow from the inlet 3i to the outlet 3u. Fig. 1 shows the closing position of the valve body 5; the above-mentioned releasing position is not shown.

The valve body 5, which is, for example, of rotation-symmetric design, is preferably also manufactured from an above-mentioned plastic. Preferably, the tap 1 is provided with a resilient closing piece, for instance a rubber or plastic sealing element, which, in the closed valve position, is located between the valve body 5 and the seat 6 (and is compressed slightly between them) to guarantee a watertight closure between seat and valve body. In the exemplary embodiment, on a side facing the valve seat 6, the valve body 5 is provided with such a resilient, compressible sealing part 5a. Alternatively, the seat 6 may be provided with a resilient sealing part.

The sealing part 5a may, for instance, be connected fixedly, integrally with the valve body 5, or be a replaceable part. As follows from the Figures, the present valve body 5 rests, at least via a closing side of the sealing part 5a facing the seat 6, on an opposite inner side of the seat 6, to close off the inlet, in the closing position mentioned.

Optionally, the inside of the seat 6 may, for instance, be provided with an inwardly projecting, narrow, annular edge which locally compresses the sealing part 5a in the closed valve position, to provide extra good sealing.

When the valve body 5 is in the closing position, no water can flow between valve body 5 and seat 6. In this valve body closing position, the sealing element 5a of the valve body 5 is pressed between valve body 5 and seat 6 with relatively low force (in axial direction), under the influence of a spring force exerted by spring means 25 (for instance a spiral spring). A respective spring force (with which sealing element 5a is compressed, and valve body 5 is pressed in the direction of the seat 6 in the closed valve position) may, for instance, be less than 5 N, in particular less than 1 N.

When the valve body 5 (with sealing element 5a) is in the releasing position moved away from the seat 6, the valve 5, 6 is opened, and water can flow from the inlet 3i to the outlet 3u, along the valve body 5 and a tap spindle 8 (part of the above-mentioned closing means) through an inner space of the tap housing 1.

According to an elaboration, the valve body 5 may be fixedly, integrally, connected to the spindle 8, for instance manufactured preferably in one piece with the spindle 8.

In the example shown, however, the valve body in itself is not fixedly connected to the spindle 8, to form a non-return valve system (check valve). Preferably, the above-mentioned spring means 25 are provided, arranged to exert a spring force on the valve body 5 for moving this body 5 in the direction of the seat 6. When the spindle 8 is in a valve releasing position, the valve body 5 is held in a respective releasing position under the influence of fluid pressure (of fluid supplied to the inlet 3i). The spring means 25 can bring the valve into the closing position when the fluid pressure (upstream with respect to the tap, i.e. in the inlet 3i) falls away, at least, if the pressure in the inlet 3i is less than or equal to the pressure in the outlet 3u. The spring means 25 may be manufactured in different manners, and from different materials, for instance metal, steel (preferably stainless steel), plastic, or the like.

The valve preferably comprises an aerator 11 to aerate the fluid outlet 3u, via the inner space surrounded by the tap housing, when the valve body is in the closing position. In this example, with an opened aerator 11, ambient air can flow along the outside of the spindle 8 (for instance via outer screw thread of the spindle 8) to reach the outlet 3u, for instance to aerate a fluid-taking element (for instance a washing machine hose or the like).

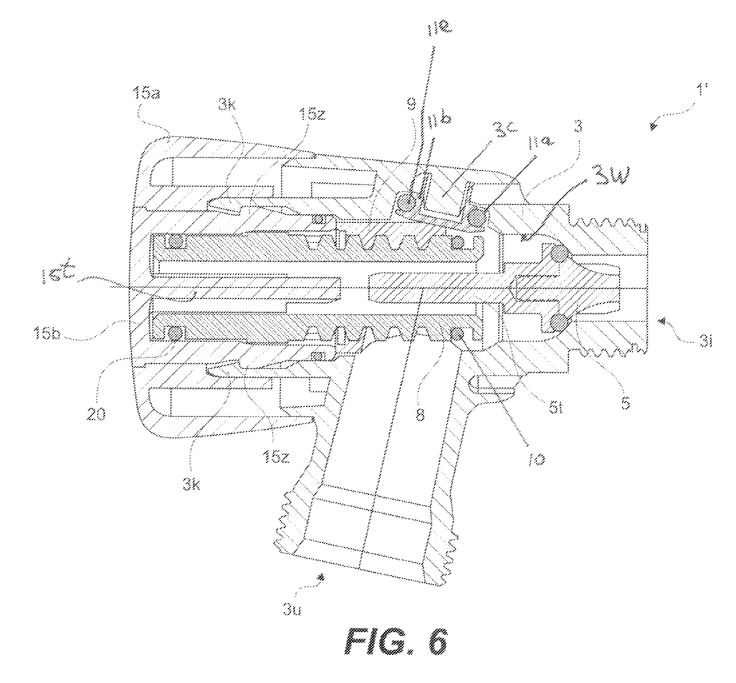

The present aerator 11 is provided with a passage 11a provided in the tap housing 3 and an (in itself, substantially rotationally symmetric, movable, and in this example sleeve-shaped) plastic valve element 11b. The valve element 11b can operatively close off the passage 11a during use when a fluid valve is opened (at least, if the pressure in the tap housing is higher than an atmospheric environmental pressure, in particular under the influence of fluid in the tap housing), and release it when a fluid valve is closed (at least, if the pressure in the tap housing is lower than an atmospheric environmental pressure, as in Fig. 1). In the example, the aerator 11 is opened when the tap 1 is closed. As follows from the exemplary embodiment shown in Fig. 6, the valve element 11b may be provided with a resilient closing element, in particular an O-ring 11e, to achieve a fluid-tight closure in a closing position of the aerator.

In the example, the tap housing 3 is provided integrally (in one piece) with a cylindrical aerator valve guide cam 3c, along which valve element 11b is movable, and along which the aerator passage 11a extends. In this example, an outside of valve element 11b is supported against a spindle nut 9 discussed in more detail below, in the opened aerator position shown.

In an advantageous manner, an entrance 11c of the aerator passage is directed towards a tap rear side, while at least a part 11d of aerator-passage runs in particular parallel with respect to a spindle longitudinal direction. Further, the aerator 11 is advantageously provided opposite the fluid outlet 3u in the housing; after mounting, the spindle 8 extends between outlet 3u and aerator 11 (see Fig. 1). In this manner, a particularly slender tap can be obtained, compared to known metal taps where an aerator is located next to the outlet. In addition, the aerator 11 of the example can be provided in the housing 3 in a relatively efficient manner, during manufacture of the tap 1, in particular utilizing tools introduced via the outlet 3u to provide an aerator chamber part in the housing 3 (for instance removing, boring or the like). In addition, after mounting, the aerator 11 of the tap is hidden from view from a front side of the tap.

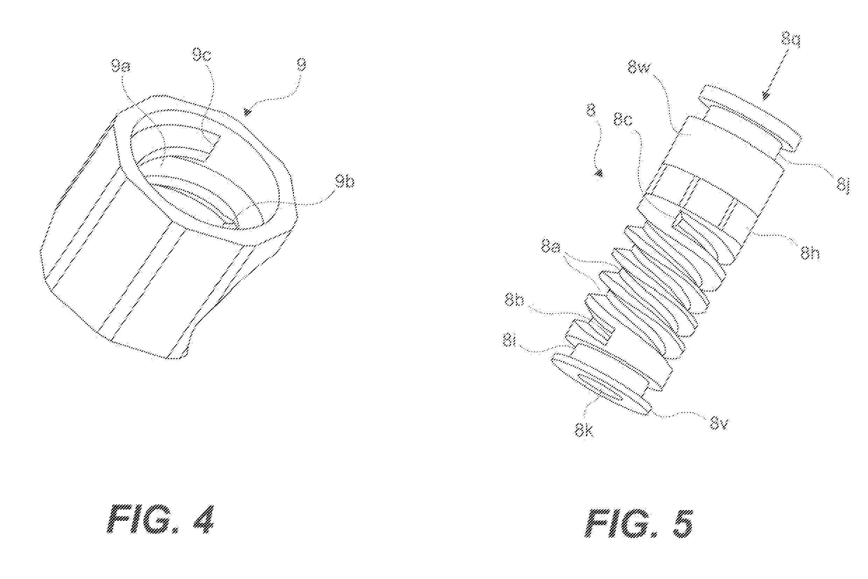

The present tap 1 comprises an at least axially translatable spindle 8 provided with outer screw thread 8a (see Fig. 5) which is placed behind the valve body 5, and a spindle nut 9 provided with inner screw thread 9a (see Fig. 4) to cooperate with the spindle, such that a rotation of the spindle 8 with respect to the spindle nut (or vice versa, according to an alternative exemplary embodiment) leads to translation of the spindle 8. In the present example, the spindle 8 is a valve operating spindle.

In this example, centerlines of the spindle 8 and fluid inlet 3i coincide.

In this example, the spindle 8 and nut 9 are each manufactured wholly from rigid plastic, for instance an above-mentioned fiber-reinforced plastic (for instance glass fiber-reinforced plastic), or POM, or another plastic. Further, the spindle 8 is provided with only a few turns of plastic screw thread 8a (in particular 5 turns or fewer than 5 turns). The spindle nut 9 is provided with only a few turns of plastic screw thread 9a (in particular fewer than 3 turns). The pitch of the respective plastic screw thread 8a, 9a is relatively large (for instance larger than 5 mm). The present spindle 8 preferably has an outer diameter larger than 1 cm, which yields stable operation, and moreover additional durability. Preferably, the spindle 8 is of hollow design (see Fig. 1).

It is advantageous when the spindle 8 and the valve body 5 are provided with rigid, facing plastic pressing parts, like in the example. In this manner, the spindle 8 can accurately, reliably and durably operate the valve body 5. As follows from Fig. 1, these pressing parts comprise the (in this case annular) contact surfaces of spindle 8 and valve body 5 guided towards each other.

A rotatable cap 15 acting as an operating means (operating knob) is provided to operate the spindle/spindle nut assembly 8, 9. The cap 15 is preferably also manufactured from plastic, for instance a fiber-reinforced plastic or a non-fiber-reinforced plastic. The cap 15 is preferably non-detachably, and preferably by means of a snap connection, rotatably coupled with the housing 3, and more particularly such that translation of the cap 15 with respect to the housing 3 is blocked.

In the example, the spindle nut 9 is immovably included in the housing 3. The spindle 8 is non-rotatably, and axially translatably, coupled with the cap 15.

Optionally, spindle nut 9 may, for instance, be integrated with the housing, be manufactured in one piece therewith, be non-detachably coupled with the housing 3, for instance by a glue or snap connection, or be configured otherwise. In the example, the nut 9 and the housing 3 are separate parts, with the housing 3 keeping the nut 9 in position. According to an extra advantageous embodiment, the spindle nut 9 is formed by an assembly of two (or more) nut parts, which, for instance from a disassembled position (not shown), are arranged on the spindle 8 to form the composite nut 9 (cooperating with the spindle 8). Alternatively, the spindle 8 may consist of two (or more) parts, which are only attached to one another (to form the spindle 8) after the nut has been arranged on one of the spindle parts.

In the example, the cap 15 is provided with a spindle holder 15h which can hold an engaging part 8h of the spindle 8 in itself in a form-locked manner viewed in circumferential direction (for instance without use of a glue connection or the like), to form a non-rotatable coupling therebetween. In addition, the spindle 8 is axially translatable with respect to the cap 15. The cap 15 may, for instance, be provided with an integral plastic inner sleeve 15h (for instance with an angular inner circumference, for instance a regular polygon viewed in cross section) engaging an engaging part 8h (for instance with an angular outer circumference, for instance a regular polygon viewed in cross section) of the spindle 8. In the example, the inner sleeve 15h of the cap 15 is designed to movably include the engaging part 8h of the spindle 8.

Rotation of the cap 15 leads to rotation of the spindle 8, such that the spindle 8 (under the influence of screw thread cooperation between the fixed nut 9 and the spindle 8) moves in the direction of the valve body 5 (i.e. a closing direction R, see Fig. 1) or, conversely, away therefrom, depending on the direction of rotation of the cap 15 and the configuration of the respective screw thread 8a, 9a. The guide sleeve 15h of the cap can then provide spindle translation guidance.

In particular, a durable configuration is found to be obtained when the tap 1 is provided with a stop (located at a distance from the valve body 5) limiting axial translation of the spindle 8 (with respect to the tap housing), in the closing direction R (i.e. towards the seat 6), when the spindle 8 keeps the valve body 5 in the closing position (and the spindle 8 is in a corresponding closing position). The stop allows translation of the spindle 8 in an opposite direction (i.e. away from seat 6).

In this manner, damage or deformation, for instance as a result of creep, of the screw thread of spindle 8 and nut 9, can be prevented in a highly effective manner. In particular, the stop is so designed that the stop prevents a (further) translation of the spindle in the direction R of the valve seat 6 at the moment when the valve only just (though sufficiently) closes, for instance when the valve body 5 is pressed against the seat 6 with an above-mentioned relatively low force (and the above-mentioned closing part 5a is slightly compressed).

The stop may be designed in different manners. The stop may, for instance, be part of the valve housing, and, for instance, engage (and support against) an outer edge of the spindle 8 as soon as the spindle 8 has been brought into a position where the valve body is in the closing position.

In the example, the stop is designed to block a rotational movement of the spindle 8 (in a first direction of rotation), in a closing position of the spindle, as soon as the valve body 5 has been brought into the closing position (as a result of spindle translation in the closing direction R), for the purpose of blocking further translation (in the closing direction R) of the spindle 8. The above-mentioned stop allows a rotational movement of the spindle 8 in a second direction of rotation opposite to the first direction of rotation (for bringing the spindle into a releasing position).

In the example, inner screw thread 9a of the spindle nut and the outer screw thread 8a of the spindle 8 are each provided with a first end wall 8b, 9b, which first end walls form stops (i.e. blocking walls) to limit axial translation (and rotation, in the first direction of rotation) of the spindle 8 when the spindle is in the closing position. In particular, these first end walls 8b, 9b are provided with rotation-blocking surfaces (stop surfaces) extending at right angles with respect to respective screw thread channels, perpendicular to a respective direction of rotation of spindle 8 with respect to the spindle nut 9.

In a releasing position, the spindle 8 is moved backwards, such that a spindle end 8q remote from the valve seat 6 is located near an opposite inner side of the cap 15. Preferably, the inner screw thread 9a of the spindle nut and the outer screw thread 8a of the spindle are each also provided with a second end wall 8c, 9c, which second end walls form stops to block further axial translation of the spindle towards the cap 15 (and to block further rotation of the spindle being in the releasing position with respect to the spindle nut, in the second direction of rotation). The second end walls 8c, 9c may, for instance, also be provided with respective stop surfaces extending at right angles with respect to respective screw thread channels, perpendicular to a respective direction of rotation of spindle and spindle nut.

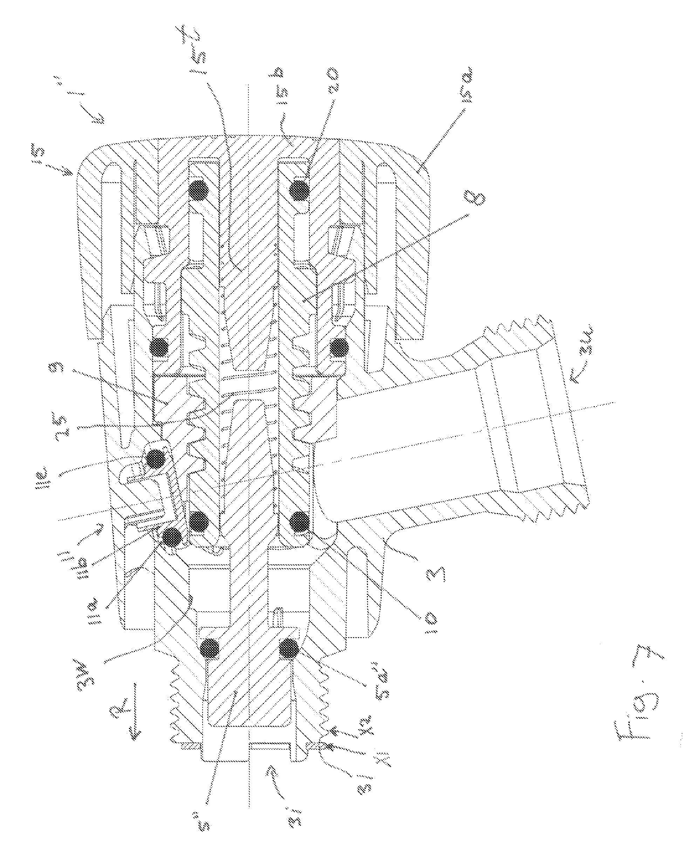

The present tap 1 is provided with a resilient closing means 10 (in particular a radial sealing), in particular a first O-ring 10. The ring 10 is located between an outer circumference of the spindle 8 and a cylindrical inside 3w of a front part of the tap housing when the spindle 8 has been brought into a valve-closing position. In this example, the O-ring 10 is at a distance from the cylindrical inside 3w of the front part of the tap housing when the spindle 8 has been brought into the valve-releasing position, so that fluid can flow from the inlet 3i along the spindle 8 to the outlet 3u (see Figs. 6 and 7 concerning the further exemplary embodiments). Therefore, the spindle 8 itself can form a primary closing means of the tap (for instance independent of a valve body 5 serving as a secondary closing means). According to an alternative embodiment (not shown), the tap is provided not with the above-mentioned valve body 5 but with the spindle 8 as an operable shutoff.

As the Figures show, in this example, the first O-ring 10 is arranged on the spindle 8, near a front spindle end (which is proximal to the valve body). The present spindle 8 is provided with a cylindrical front end 8v (see Fig. 5), provided with a ring groove 8i to receive the first O-ring 10, such that the O-ring is slightly, radially, compressed between spindle 8 and cylindrical inside 3w in the closed valve position. Alternatively, on an inside, the housing may be provided with such an O-ring, to form a fluid-tight connection with an end part of the spindle 8 when the spindle 8 is in the closing position (in that case, the spindle is moved away from the O-ring when the spindle is moved away from inlet 3i, to provide the opened tap position).

The valve body 5 (and seat 6), an end of the spindle 8 and the tap housing 3 limit, in the closed valve position, a fluid-collecting space H which is annular in the example. Preferably, a fluid passage (in this case a fluid passage channel 8k) is provided to discharge fluid present in this collecting space H during a closing movement of the spindle 8.

Under the influence of a fluid-tight connection brought about by the first O-ring 10, fluid present in the fluid-collecting space H can be discharged via the above-mentioned fluid passage; a spindle channel 8k (in this case central) can receive this fluid and pass it to a fluid-collecting space 18 defined by spindle 8 and housing 3.

The above-mentioned fluid passage channel 8k of the spindle 8 extends between ends of the spindle 8, to receive fluid, and in particular to allow fluid to pass during spindle translation. The central spindle channel 8k can receive fluid from the collecting space H during a closing movement of the spindles 8, in particular to prevent pressure building up in this space H. As Fig. 1 further shows, the end of the spindle channel 8k remote from the valve 5, 6 opens into a fluid chamber 18 surrounded by the tap (and in this case the spindle 8 and the cap 15).

In this example, the valve check spring means 25 extend through the central spindle channel 8k, in particular concentrically. In this manner, relatively long spring means 25 can be used. In addition, an inside of the spindle channel 8k can keep the spring means 25 in a lateral position, at least prevent buckling of the spring means. Relatively long spring means 25, measured in a spindle longitudinal direction, may be used, so that, therewith, a relatively constant spring force can be exerted on the valve body.

Further, the valve body 5 is provided with a central cam 5t facing the cap 15, on which an end of the spring means 25 is provided, which cam 5t reaches into the spindle channel 8k in the closing position of the spindle 8. According to a further elaboration, further, a second central cam 15t is provided (for instance a part 15t of the cap 15) to support an opposite end of the spring means 25, see the examples shown in Figs. 6-8.

The present tap 1 is provided with a second resilient closing means 20, in particular a second O-ring, which is located between an outer circumference of the spindle 8 and an inside of the cap 15. The second O-ring is, in this case, provided on the spindle 8, near a rear spindle end (located near the chamber 18). The second O-ring prevents fluid present in the chamber 18 from leaking to an environment (via the cap 15).

In this example, the spindle 8 is provided with a cylindrical rear end 8w (see Fig. 5), provided with a ring groove 8j to receive the second O-ring 20, such that the O-ring is slightly compressed between spindle 8 and cap 15 (to bring about fluid sealing). The inside of the spindle sleeve of the cap 15 is provided with a rear part 15w of a circular cross section, which the second O-ring 20 engages.

The present tap 1 has various advantages. The tap 1 is relatively compact, and may have a particularly slender design. A user can relatively quickly and easily open and close a tap 1 provided by the invention, through a suitable operation of the knob (i.e. cap) 15 and, doing so, needs to use little force for this thanks to the configuration of the inner work 5, 6, 8, 9. Use of the above-mentioned stop prevents the various plastic parts of the tap 1 from being damaged during normal use. The stop can prevent such parts from slowly deforming plastically (creep, jack action), which additionally increases the durability of the tap 1. In addition, the tap 1 can be manufactured reliably and relatively efficiently in mass production, and can guarantee leakproof connection.

Fig. 6 shows a cross section of a second example 1' (above-mentioned spring means 25 are not shown in Fig. 6, but an O-ring 11e provided on aerator element 11b is shown). The second example I' differs from the exemplary embodiment 1 shown in Figs. 1-5 in that the cap consists of two parts 15A, 15B, namely an outer cap 15A and an inner cap 15B. The two parts 15A, 15B can be coupled with each other in different manners, for instance via suitable snap means. The inner cap 15B is preferably manufactured from the same material as the spindle 8 and spindle nut 9. The outer cap 15A may be manufactured from a different material, for instance a different plastic than other parts of the tap. In the second example, the housing 3 is provided with snap fingers 3k to form a snap connection with engaging cams 15z of the inner cap 15B. The outer cap 15A is configured to prevent pivoting of the snap fingers 3k, for the purpose of locking the inner cap 15B.

The operation of the second example I' is the same as the operation of the first example 1. Here, the inner cap 15B can prevent the outer cap 15A from coming into contact with the fluid flowing through the tap 1'. In other words: the inner cap 15B forms a barrier between the outer cap and the fluid. An advantage is that a larger freedom of choice of material and shape is available for the outer cap 15A.

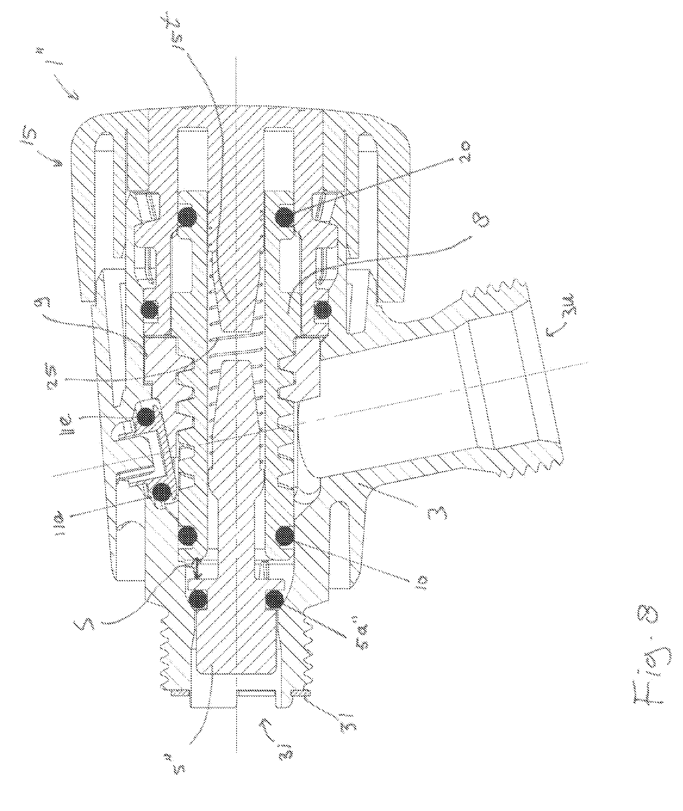

Figs. 7-8 show a cross section of a third exemplary embodiment 1". The third example differs from the example shown in Figs. 1-5 in that the spindle 8 and valve body 5" are configured such that the spindle 8 in itself does not press against the valve body 5" (or is in contact therewith) in the closing position - shown in Fig. 8 - of the two parts 5", 8.

A clearance indicated by arrow S in Fig. 8 is available between valve body 5" and spindle 8. The valve body is movable over this clearance S, against the spring force exerted by spring means 25, if the spindle 8 is in the closing position.

In this example, the end part of the spindle 8 (opposite valve body 5") forms a primary shutoff of the tap 1". This spindle part closes off the inlet 3i, by means of the resilient O-ring 10 compressed between this spindle part and the opposite housing inside 3w, when the spindle 8 is in the closing position (see Fig. 8).

In the releasing position of the spindle shown in Fig. 7 (after translation of the spindle in the direction away from the inlet 3i), the first O-ring 10 is no longer compressed between the spindle and the housing. In this case, the O-ring 10 is brought at a distance from the inside 3w of the tap housing. As a result, fluid can flow from the inlet 3i (along the spindle 8) to the outlet 3u; valve body 5" is then brought into the respective releasing position under the influence of fluid pressure.

The third exemplary embodiment is provided with an additional flat reinforcing ring 31 provided on an end face of the fluid inlet 3i, concentrically with the inlet 3i. The ring 31 is particularly manufactured from a material that is harder than the plastic from which the housing 3 is manufactured. The reinforcing ring 31 may, for instance, be manufactured from a very rigid plastic, a metal or an alloy, for instance steel, or the like. Preferably, the reinforcing ring 31 is in itself provided with outer screw thread x1, for instance only one turn or a part of a turn of outer screw thread x1, which outer screw thread x1 connects to the plastic outer screw thread x2 of the plastic inlet 3i. Thus, the rigid outer screw thread of the ring 31 can form a (short) extension of the plastic outer screw thread x2 of the inlet 3i of the housing 3. The reinforcing ring 31 can protect the plastic outer screw thread x2 of the inlet 3i against cutting, when the inlet 3i is screwed onto a metal inner screw thread of a fluid supply pipe (not shown). The ring may be non-rotatably coupled with the inlet 3i of the housing 3 in various manners, for instance by means of a form-locked coupling, a clamp coupling or the like, or in a different manner.

Further, the valve body 5" of this third exemplary embodiment is provided with a resilient O-ring 5a" which, in a closing position of this body 5", makes contact with an inside of the tap housing, to close off the inlet 3i. Such an O-ring is also used on the valve body of the exemplary embodiment shown in Fig. 6.

It will be readily apparent to a skilled person that the invention is not limited to the embodiments mentioned and shown. Various modifications are possible within the framework of the invention as set forth in the following claims.

## Claims

1. A fluid tap, provided with:
- a tap housing (3) with a fluid inlet (3i) and fluid outlet (3u);
- an at least axially translatable spindle (8) provided with outer screw thread (8a);
- a spindle nut (9) provided with inner screw thread (9a) to cooperate with the spindle (8), such that a rotation of the spindle with respect to the spindle nut, or vice versa, leads to translation of the spindle;
**characterized in that** the tap (1) is manufactured from plastic, wherein the tap (1) is provided with a stop limiting a translation of the spindle (8), wherein the stop blocks in particular a rotation movement of the spindle (8) to limit said translation.

2. A tap according to claim 1, wherein the inner screw thread (9a) of the spindle nut and the outer screw thread (8a) of the spindle are each provided with a first end wall (8b, 9b), which first end walls form stops to limit said axial translation of the spindle, in particular by blocking a rotation movement.

3. A tap according to claim 2, wherein said first end walls (8b, 9b) are provided with stop surfaces extending at right angles with respect to respective screw thread channels, perpendicular to a respective direction of rotation of spindle and spindle nut.

4. A tap according to any one of the preceding claims, provided with a first resilient closing means (10), in particular an O-ring, which is located between an outer circumference of the spindle (8) and an inside of the tap housing when the spindle (8) has been brought into a closing position, in particular to close off the inlet (3i).

5. A tap according to claim 4, provided with a second resilient closing means (20), in particular an O-ring, which is located on an outer circumference of the spindle (8), at a distance from the first O-ring, and in particular near a rear end of the spindle (8), wherein said outer screw thread of the spindle (8) extends in particular in an area located between the first and second closing means (10, 20).

6. A tap according to any one of the preceding claims, wherein the spindle (8) is provided with a fluid passage channel extending between ends of the spindle (8).

7. A tap according to any one of the preceding claims, wherein, in a closed valve position, the valve body (5), an end of the spindle (8) and the tap housing (3) bound a fluid collecting space (H), wherein preferably a fluid passage (8k) is provided to discharge fluid present in this collecting space (H) during a closing movement of the spindle (8).

8. A tap according to any one of the preceding claims, wherein the tap (1) is provided with a cap (15) acting as an operating means, which is coupled with the housing (3) by means of a snap connection.

9. A tap according to any one of the preceding claims, wherein the fluid inlet (3i) is provided with a plastic neck with outer screw thread, wherein the fluid outlet (3u) is provided with a plastic outflow nozzle with outer screw thread.

10. A tap according to any one of the preceding claims, wherein centerlines of the spindle (8) and the fluid inlet (3i) coincide.

11. A tap according to any one of the preceding claims, provided with an axially movable valve body (5) which rests on a valve seat (6) in a closing position to close off the inlet (3i), and is moved away from the seat in a releasing position to release the inlet (3i), wherein said spindle (8) is placed behind the valve body (5).

12. A tap according to claim 11, wherein the valve body (5) is part of a non-return valve system (5, 25).

13. A tap according to any one of the preceding claims, provided with an aerator (11) to aerate the fluid outlet (3u), wherein the aerator is provided in particular with a passage (11a) provided in the tap housing (3) and a plastic valve element (11b).

14. A tap according to claim 13, wherein an entrance of the aerator passage is directed to a tap rear side, wherein at least a part of the aerator passage runs in particular substantially parallel with respect to a spindle longitudinal direction.

15. A tap according to claim 13 or 14, wherein the aerator (11) is provided opposite the fluid outlet (3u) in the housing (3).
